# EUROPEAN PATENT SPECIFICATION

(11) **EP 1 832 504 B1**
(45) Date of publication and mention of the grant of the patent: **22.06.2011**
(21) Application number: 06025729.2
(22) Date of filing: 12.12.2006
(51) Int. Cl.: B62M 25/08

(54) **Electronic derailleur control system**
Elektronisches Steuersystem für eine Kettenschaltung
Système électronique de commande pour dérailleur

(30) Priority: 06.03.2006 US 367696
(43) Date of publication of application: 12.09.2007
(73) Proprietor: SHIMANO INC., Osaka 590-8577 (JP)
(72) Inventor: Watarai, Etsuyoshi, Sakai City Osaka 590-8577 (JP)
(74) Representative: Hofmann, Harald

(56) References cited:
- EP-A- 1 362 783
- EP-A- 1 394 031
- EP-A2- 1 384 659
- WO-A-88/01962
- US-A- 5 653 649
- US-A- 5 865 454

## Description

### BACKGROUND OF THE INVENTION

### Field of the Invention

This invention generally relates to an electronic derailleur control system for a bicycle. More specifically, the present invention relates to an electronic derailleur control system that allows the rider to use different sprocket configurations with a motorized derailleur.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, the transmission or drive train of the bicycle has been extensively redesigned in recent years. Specifically, manufacturers of bicycle components have been continually improving shifting performance of the various shifting components such as the shifter, the shift cable, the derailleur, the chain and the sprocket.

In the past, a typical bicycle transmission is operated by a shift operating wire connected between a manual transmission and a manually operated shift operating device mounted on the handlebar. The rider operates the shift operating device to selectively pull or release the shift operating wire which, in turn, operates a derailleur of the transmission in the desired manner. Thus, bicycle shifters were mechanically operated shifting devices that were sometimes located near the brake levers of the bicycle. Thus, an operating force was typically applied by one of the rider's fingers to operate a shift control lever, which in turn transmitted the operating force to the drive component of a bicycle shifting mechanism by a cable that was fixed at one end to the control lever and fixed at the other end to the derailleur.

More recently, bicycles have been provided with an electronic drive train for smoother shifting. Electronic drive trains may operate manually or automatically. In manually operated electronic drive trains, a button or lever on a shift control device mounted to the bicycle handlebar is manipulated so that a gear shift command is output to operate the motor and upshift or downshift the bicycle transmission accordingly. In automatically operated electronic drive trains, gear shift commands are generated automatically based on bicycle speed. Some of these electronic drive trains use a rear multi-stage sprocket assembly with a motorized rear derailleur and a front multi-stage sprocket assembly with a motorized front derailleur. These motorized derailleurs are electronically operated by a cycle computer for automatically and/or manually shifting of the motorized derailleurs.

Thus, electrical switches have been used instead of mechanical control levers in order to operate the bicycle shifting mechanism. Two examples of electrical shift control devices are disclosed in U.S. Patent No. 6,073,730 and U.S. Patent No. 6,129,580 (both assigned to Shimano, Inc.). These patents disclose a pair of electrical switches may be provided in the side of the bracket body. Another example of this type of electrical shift control device is disclosed in U.S. Patent Application Publication No. 2005/0223840 (assigned to Shimano, Inc.). In this publication, an electrical switch is mounted to the brake lever.

However, the electronic control systems used for shifting the motorized derailleurs are typically designed to only operate with a particular drive train (e.g., a particular front crankset and a particular rear cassette). Specifically, some front cranks have three sprockets, while others have two sprockets with the number of teeth and the spacing between adjacent sprockets being different depending on the model and/or manufacturer. Likewise, some the rear cassette have ten gears while others have nine, eight or seven gears with the number of teeth and the spacing between adjacent gears being different depending on the model and/or manufacturer. Thus, the amount that the chain guide needs to be moved will depend upon the particular front crankset and the particular rear cassette that are used in a drive train. Document EP 1 384 659 discloses an electronic derailleur control system according to the preamble of claim 1.

In view of the above, it will be apparent to those skilled in the art from this disclosure that there exists a need for an improved electronic derailleur control system. This invention addresses this need in the art as well as other needs, which will become apparent to those skilled in the art from this disclosure.

### SUMMARY OF THE INVENTION

One object of the present invention is to provide an electronic derailleur control system that can be used with variety of different drive train configurations.

Another object of the present invention is to provide electronic derailleur control system that can be used with drive trains from different manufacturers.

The foregoing objects can basically be attained by providing an electronic derailleur control system that basically comprises a derailleur, a gear shift controller and a storage device. The derailleur is configured and arranged to shift from at least a first derailleur position to a second derailleur position. The gear shift controller is operatively coupled to the derailleur to operate the derailleur to shift from the first derailleur position to the second derailleur position during a gear shifting operation. The storage device contains at least first stored gear shifting data pertaining to a first gear configuration and second stored gear shifting data pertaining to a second gear configuration. The storage device is operatively coupled to the gear shift controller to selectively provide one of the first and second stored gear shifting data contained in the storage device to the gear shift controller to selectively control the derailleur based on which of the first and second stored gear shifting data is being used. The gear shift controller is configured to selectively control an amount of movement of the derailleur between at least the first and second derailleur positions based on which of the first and second stored gear shifting data is being used. The control system comprises a mode button operatively connected to a cycle computer for changing a mode operation of the cycle computer, a display unit that is electrically connected to the cycle computer, an electrical shift switch configured for generating an operational command that is received by the cycle computer to cause the shifting of the derailleur. The mode button is operatively connected to the display unit, such that when the mode button is depressed, the display switches from a normal informational display screen to selection screen, the electrical switches being used to move between the first ad second stored shifting data in order to select one of the gear shifting data. The first gear configuration correspond to a first gearset and the second gear configuration corresponds to a second gearset different from the first gearset, the gear shifting data pertaining to a respective gear configuration comprising a respective number of gears and a respective number of teeth for each gear, wherein the gear shifting data pertaining to a respective gear configuration comprises an axial spacing between the gears.

These and other objects, features, aspects and advantages of the present invention will become apparent to those skilled in the art from the following detailed descriptions, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a side elevational view of a bicycle equipped with an electronic derailleur control system in accordance with a preferred embodiment of the present invention;

Figure 2 is an enlarged perspective view of the handlebar with a pair of bicycle control (brake/shift) devices and a cycle computer that form part of the electronic derailleur control system in accordance with the present invention;

Figure 3 is an inside side elevational view of the bicycle control (brake/shift) device located on the right hand side of the handlebar;

Figure 4 is a rear elevational view of the bicycle control (brake/shift) device illustrated in Figure 3;

Figure 5 is a top plan view of the bicycle control (brake/shift) device illustrated in Figures 3 and 4;

Figure 6 is a rear perspective view of the motorized front derailleur illustrated in Figure 1 that form part of the electronic derailleur control system in accordance with the present invention;

Figure 7 is a side elevational view of the motorized rear derailleur of the bicycle illustrated in Figure 1 that form part of the electronic derailleur control system in accordance with the present invention;

Figure 8 is a diagrammatic top plan view of the bicycle drive train of the bicycle illustrated in Figure 1 in which ten speed cassette sprockets are used;

Figure 9 is a diagrammatic top plan view of the bicycle drive train of the bicycle illustrated in Figure 1 in which nine speed cassette sprockets are used;

Figure 10 is an enlarged top plan view of the LCD display unit of the cycle computer in a normal operating mode in which an "Informational" display screen is illustrated;

Figure 11 is an enlarged top plan view of the LCD display unit of the cycle computer in a rear cassette setup mode in which a "Rear Cassette Selection" display screen is illustrated;

Figure 12 is an enlarged top plan view of the LCD display unit of the cycle computer in a front crankset setup mode in which a "Front Crankset Selection" display screen is illustrated;

Figure 13 is a schematic block diagram of one particular arrangement of the electronic derailleur control system in accordance with the present invention;

Figure 14 is a schematic block diagram of an alternate arrangement of the electronic derailleur control system in accordance with the present invention; and

Figure 15 is a schematic block diagram of another alternate arrangement of the electronic derailleur control system in accordance with the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

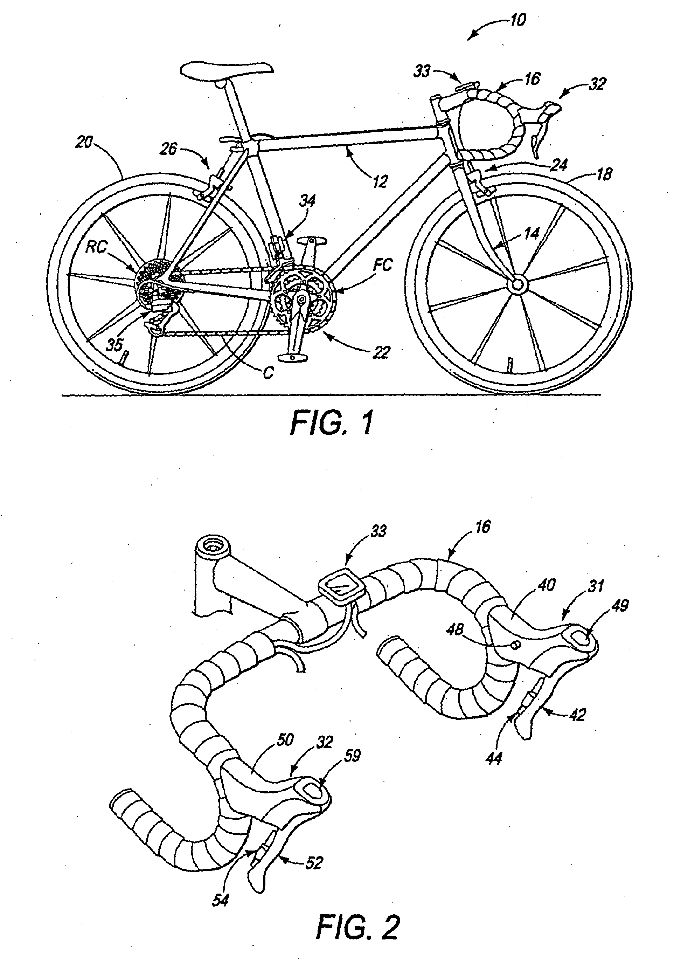

Referring initially to Figures 1 and 2, a bicycle 10 is illustrated with an electronic derailleur control system in accordance with one embodiment of the present invention. The bicycle 10 is a road bicycle comprising a diamond-shaped frame 12, a front fork 14 rotatably mounted to the frame 12, a drop type bicycle handlebar 16 mounted to the upper part of the front fork 14, a front wheel 18 rotatably attached to the lower part of the front fork 14, a rear wheel 20 rotatably attached to the rear of frame 12, and a drive train or unit 22. A front wheel brake 24 is provided for applying a braking force to the front wheel 18, and a rear wheel brake 26 is provided for applying a braking force to the rear wheel 20. As explained below, the electronic derailleur control system of the present invention is configured and arranged so that it can be used with a variety of drive train configurations.

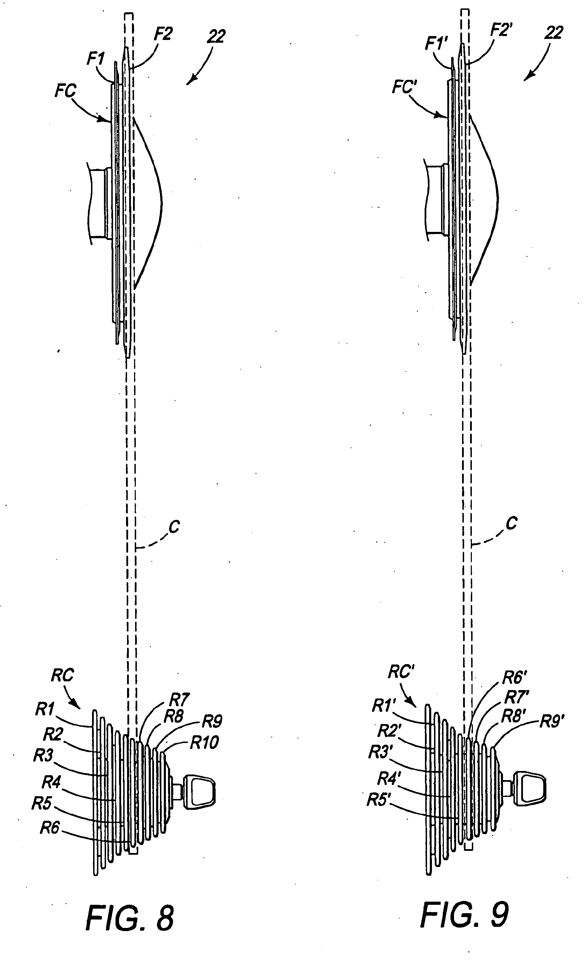

As seen in Figures 1 and 8, the drive train 22 basically comprises a chain C, a front crankset FC and a rear cassette RC. The front crankset FC has two coaxially mounted sprockets F1 and F2, while the rear cassette RC has ten sprockets R1 to R10. The number of teeth on the front sprocket F1 is less than the number of teeth on the front sprocket F2. The numbers of teeth on the rear sprockets R1 to R10 gradually decrease from the rear sprocket R1 to the rear sprocket R10. As a result, rear sprocket R1 has the greatest number of teeth, and the rear sprocket R10 has the least number of teeth. Since the parts of the drive train 22 are well known in the art, the parts of the drive train 22 will not be discussed or illustrated in detail herein, except for as they relate to the electronic derailleur control system of the present invention.

As seen in Figures 8 and 9, in the present invention, as explained below in more detail, the rider can modify the drive train 22 so that the front crankset FC and the rear cassette RC are replaced with an alternate front crankset FC' and/or an alternate rear cassette RC '. For example, as seen in Figure 9, the alternate front crankset FC' can have a pair of sprockets F1' and F2' with each having a different number of teeth from sprockets F1 and F2, and the alternate rear cassette RC 'can have only nine sprockets R1' to R9' with each having a different number of teeth from the sprockets R1 to R10. The rider can then easily change the settings in the electronic derailleur control system to accommodate the new gear ratios of the modified drive train as well as the different axial space between adjacent sprockets and/or gears. Thus, the electronic derailleur control system of the present invention can be used with a variety of drive train configurations as well as drive train from different manufacturers.

As seen in Figures 1-7, the electronic derailleur control system basically comprises a front or left hand side dual control (brake/shift) device 31, a rear or right hand side dual control (brake/shift) device 32, a cycle computer 33, a front electronic derailleur 34 and a rear electronic derailleur 35. The left and right hand side control devices 31 and 32 are essentially identical in construction and operation, except that they are mirror images. In the illustrated embodiment, the front dual control device 31 that is on the left hand side of the handlebar 16 is electrically connected to the cycle computer 33 and the front electronic derailleur 34, while the rear dual control device 32 that is on the right hand side of the handlebar 16 is electrically connected to the cycle computer 33 and the rear electronic derailleur 35. Of course, the connections between the control devices 31 and 32 can be connected on opposite sides of the handlebar 16 so that the front electronic derailleur 34 can be operated by the rider's right hand and the rear electronic derailleur 35 can be operated by the rider's left hand as needed and/or desired. Thus, in any event, when the electronic derailleur control system is used to shift the drive train 22 of Figure 8, the front electronic derailleur 34 selectively moves between two operating positions to switch the chain C between the front sprockets F1 and F2 using the front dual control device 31, while the rear electronic derailleur 35 selectively moves between ten operating positions to switch the chain C among selected ones of the rear sprockets R1 to R10 using the rear dual control device 32. Also in the illustrated embodiment, the front dual control device 31 is mechanically connected to the front wheel brake 24 via a front brake cable, while the rear dual control device 32 is mechanically connected to the rear wheel brake 26 via a rear brake cable.

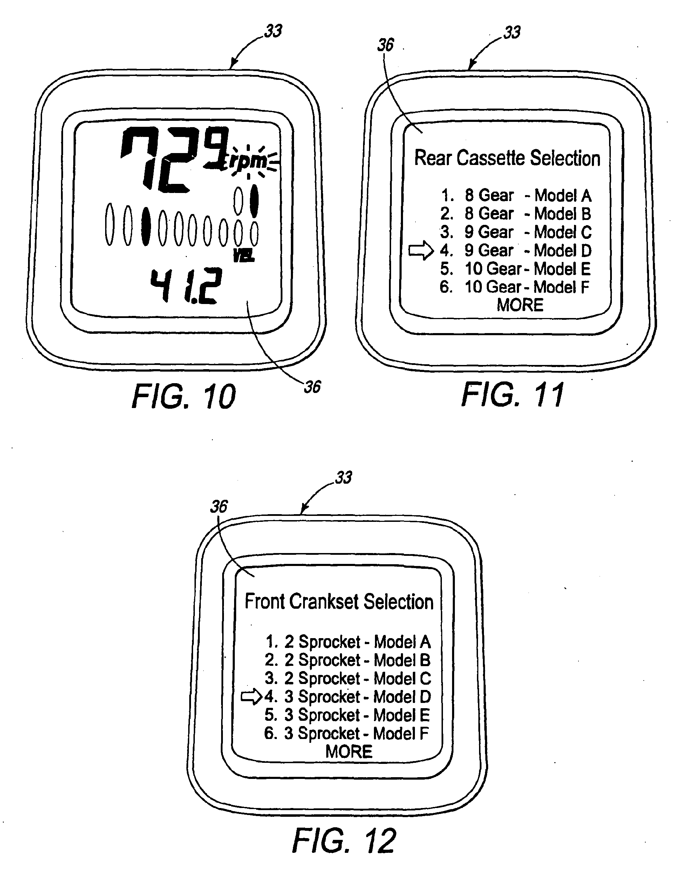

As seen in Figures 10-12, the cycle computer 33 includes a replaceable battery (not shown), a display screen 36 that displays various information to the rider as explained below. Preferably, the display screen 36 is a liquid crystal display (LCD). The cycle computer 33 also preferably includes a microcomputer (not shown) with a shift control program that controls the movements of the front and rear electronic derailleurs 34 and 35 in response to the operation of the control devices 31 and 32. The cycle computer 33 preferably also include other conventional components such as an input interface circuit, an output interface circuit, and storage devices such as a ROM (Read Only Memory) device and a RAM (Random Access Memory) device. The microcomputer of the cycle computer 33 is programmed to control the front and rear electronic derailleurs 34 and 35 to selectively shift the chain C between the front sprockets F1 and F2 and between the rear sprockets R1 to R10.

As seen in Figures 2, 10, 11 and 12, preferably, the cycle computer 33 is operatively coupled between the control devices 31 and 32 and the front and rear electronic derailleurs 34 and 35. Thus, the cycle computer 33 constitutes a remote user input unit that is operatively coupled to the front and rear electronic derailleurs 34 and 35 with the cycle computer 33 acting as a remote user input unit that is configured to selectively send a gear shifting data selection that instructs the gear shift controller on which of the first and second stored gear shifting data is to be used. The memory of the cycle computer 33 contains a list of gear shifting selections that correspond to different gear configurations. Alternatively, the cycle computer 33 can be eliminated such that the control devices 31 and 32 are directly electrically coupled to the front and rear electronic derailleurs 34 and 35. In such a case, each of the control devices 31 and 32 includes its own built in cycle computer and constitutes a remote user input unit that is operatively coupled to the front and rear electronic derailleurs 34 and 35.

The control devices 31 and 32 in conjunction with the cycle computer 33 operate the front and rear electronic derailleurs 34 and 35. Thus, the drive train 22 of the bicycle 10 is operated or electronically controlled by the control devices 31 and 32 and/or the cycle computer 33. More specifically, the control devices 31 and 32 are used to manually shift the front and rear electronic derailleurs 34 and 35 when a manual mode is selected, while the cycle computer 33 can contain a control program that automatically shift the front and rear electronic derailleurs 34 and 35 when an automatic mode is selected. One example of an automatic shifting assembly that can be adapted to be used with the present invention is disclosed in U.S. Patent No. 6,073,061 to Kimura, which is assigned to Shimano Inc. In the automatic mode, shifting of each of the front and rear electronic derailleurs 34 and 35 is preferably at least partially based on the speed of the bicycle. Thus, the bicycle 10 further includes at least one sensing/measuring device or component that provides information indicative of the speed of the bicycle 10 to its central processing unit of the cycle computer 33. The sensing/measuring component generates a predetermined operational command indicative of the speed of the bicycle 10. Of course, additional sensing/measuring components can be operatively coupled to central processing unit of the cycle computer 33 such that predetermined operational commands are received by the central processing unit (CPU) of the cycle computer 33 to operate the front and rear electronic derailleurs 34 and 35 or other components. The sensing/measuring component can be, for example, a speed sensing unit that includes a sensor and a magnet. The sensor is preferably a magnetically operable sensor that is mounted on the front fork 14 of the bicycle 10 and senses the magnet that is attached to one of the spokes of the front wheel 18 of the bicycle 10. The sensor can be a reed switch or other component for detecting the magnet. The sensor generates a pulse each time the front wheel 18 of the bicycle 10 has turned a pre-described angle or rotation. In other words, the sensor detects the rotational velocity of the front wheel of the bicycle 10. As soon as the sensor generates the pulse or signal, a pulse signal transmission circuit sends this pulse signal to the central processing unit of the cycle computer 33 to determine whether the chain C should be up shifted or down shifted. Thus, the sensor and the magnet form a sensing device or measuring component of the cycle computer 33. In other words, the sensor outputs a bicycle speed signal by detecting the magnet mounted on the front wheel 18 of the bicycle 10. Thus, speed information is sent to the cycle computer 33 to operate the front and rear electronic derailleurs 34 and 35.

As seen in Figure 2, the front dual control device 31 basically comprises a lever bracket or base member 40, a control or brake lever 42 movably coupled to the base member 40 and an electrical shift switch 44 pivotally mounted on the brake lever 42. In the illustrated embodiment, the base member 40 has a mode button 48 provided on its inner side wall and an LCD display unit 49 that is electrically coupled to the electrical shift switch 44 and that is selectively wired to the cycle computer 33 and/or the front electronic derailleur 34. This mode button 48 is operatively connected to the cycle computer 33 and/or the LCD display unit 49 for changing what is being displayed and the mode of operation of the cycle computer 33 and/or the LCD display unit 49.

Moving the electrical shift switch 44 generates a predetermined operational command that is received by the central processing unit of the cycle computer 33. Preferably, the electrical shift switch 44 is pivoted in a first direction from a rest position to cause an upshift and pivoted in a second direction from the rest position to cause a downshift. The central processing unit of the cycle computer 33 then sends a predetermined operational command or electrical signal to move or shift the front electronic derailleur 34. The front (left hand side) and rear (right hand side) control devices 31 and 32 are essentially identical in construction and operation, except that they are mirror images. Thus, the following description of the rear (right hand side) control device 32 applies to the front (left hand side) control device 31 unless otherwise indicated.

As seen in Figures 2-5, the rear dual control device 32 basically comprises a lever bracket or base member 50, a control or brake lever 52 movably coupled to the base member 50 to pivot about a pivot axis P₁ and an electrical shift switch 54 pivotally mounted on the brake lever 42 to pivot about a pivot axis P₂. The base member 50 is mounted to the bicycle handlebar 16 by a conventional metal tube clamp 56 that is attached to the rear end of the base member 50. Moving the electrical shift switch 54 generates a predetermined operational command that is received by the central processing unit of the cycle computer 33. The central processing unit of the cycle computer 33 then sends a predetermined operational command or electrical signal to move or shift the rear electronic derailleur 35.

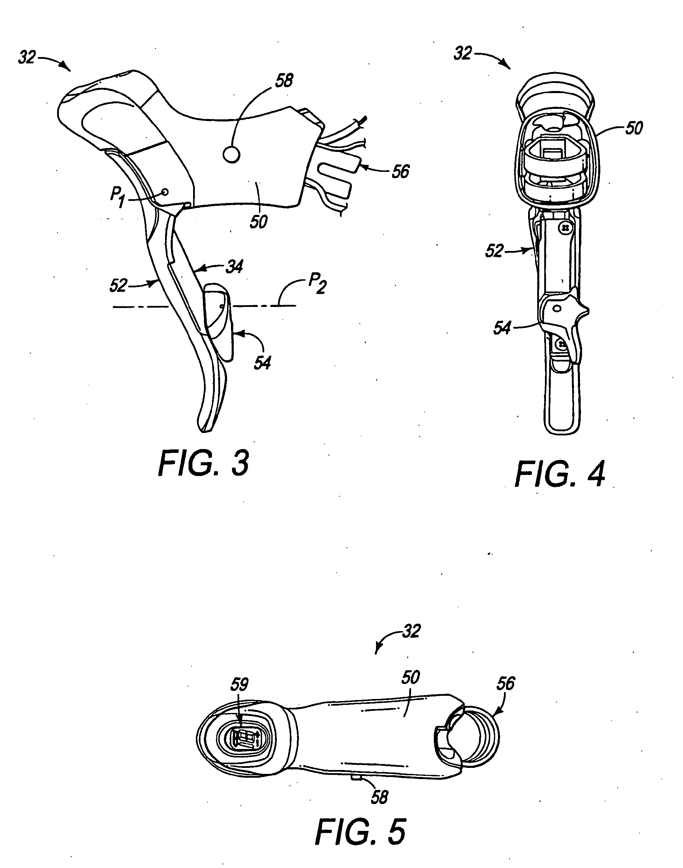

As seen in Figure 3, the brake lever 52 is a cable operated brake lever that is pivotally mounted to the base member 50 for performing a bicycle braking operation. In other words, the brake lever 52 is attached to a brake cable to operate the rear braking device 26. In this illustrated embodiment, the electrical shift switch 54 is fixedly coupled to the control lever 52 to move therewith.

The brake lever 52 has a first end pivotally attached to the base member 50 and a second free end spaced longitudinally from the first end of the brake lever 52 with the electrical shift switch 54 mounted to the brake lever 52. Thus, the control lever 52 is a cable operated brake lever that is pivotally mounted to the base member 50 for performing a bicycle braking operation.

The electrical shift switch 54 is preferably functionally identical to the electrical shift switch 44. Preferably, the electrical shift switch 54 is pivoted in a first direction from a rest position to cause an upshift and pivoted in a second direction from the rest position to cause a downshift.

As seen in Figures 3-5, the base member 50 is configured as a rider hand grip part or drop handlebar bracket body having a generally rectangular transverse cross section with rounded corner. In the illustrated embodiment, the base member 50 has an LCD display unit 59 that is electrically coupled to the electrical shift switch 54 and that is selectively wired to the cycle computer 33 and/or the rear electronic derailleur 35. The base member 50 has a mode button 58 provided on its inner side wall. This mode button 58 is operatively connected to the cycle computer 33 and/or the LCD display unit 59 for changing what is being displayed and the mode of operation of the cycle computer 33 and/or the LCD display unit 59. For example, as seen in Figures 10, 11 and 12, when the mode button 58 is depressed once, the display of the cycle computer 33 switch from the normal "Informational" display screen shown in Figure 10 to a "Rear Cassette Selection" display screen shown in Figure 11. When the cycle computer 33 displays the "Rear Cassette Selection" display screen shown in Figure 11, the electrical shift switches 44 and 54 can be used to move between the various selections by turning the electrical shift switch 44 in a first pivotal direction to move down the list and by turning the electrical shift switch 44 in a second pivotal direction to move up the list. The electrical shift switch 44 can be used to select one of the gear configurations within the rear cassette list. After the appropriate rear cassette has been selected from the rear cassette list, the cycle computer 33 will send a control signal to the rear derailleur 35 to set the appropriate amount of movement of the rear derailleur 35 for shifting between adjacent one of the rear sprockets for the particular rear cassette that was selected.

When the mode button 58 is depressed a second time, the display of the cycle computer 33 switch from the normal "Rear Cassette Selection" display screen shown in Figure 11 to a "Front Crankset Selection" display screen shown in Figure 12. Thus, the cycle computer 33 preferably has a "Front Crankset Selection" display screen for a selecting one of the plurality of gear configurations within the front crankset list. After the appropriate front crankset has been selected from the front crankset list, the cycle computer 33 will send a control signal to the front derailleur 34 to set the appropriate amount of movement of the front derailleur 34 for shifting between adjacent one of the front sprockets for the particular front crankset that was selected.

When the mode button 58 is depressed additional times, the display of the cycle computer 33 switches to various setup screens (not shown) in which the user can further program the cycle computer 33 as needed and/or desired. After a predetermined number of setup screens, the display of the cycle computer 33 will return to the normal "Informational" display screen shown in Figure 10. When the normal "Informational" display screen is being displayed, the front and rear control devices 31 and 32 operate as normal shifters to change gear ratios by pivoting the electrical shift switches 44 and 54. While the illustrated display screens of the present invention illustrates a plurality of prestored or preset gear shifting data pertaining to a plurality of gear configurations for both rear cassette and front crankset, the cycle computer 33 is preferably configured so that the number of gears and the number of sprockets, the number of teeth for each gear and each sprocket and the axial spacings gears and the sprockets can all be manually entered as needed and/or desired. Thus, the cycle computer 33 can be updated as new rear cassettes and/or front cranksets become available.

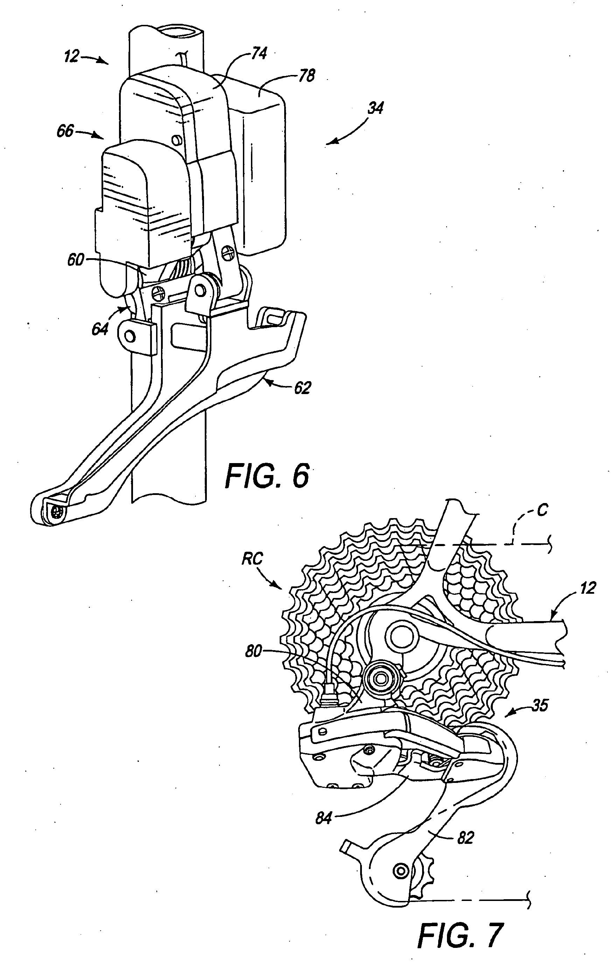

As seen in Figures 1 and 6, the front electronic derailleur 34 is configured and arranged to shift between at least a first derailleur position and a second derailleur position. In one preferred embodiment, the front electronic derailleur 34 has a fixed mounting member 60, a chain guide 62 and a linkage assembly 64 coupled between the fixed member 60 and the chain guide 62. These parts 60, 62 and 64 of the front electronic derailleur 34 are well known and will not be discussed herein.

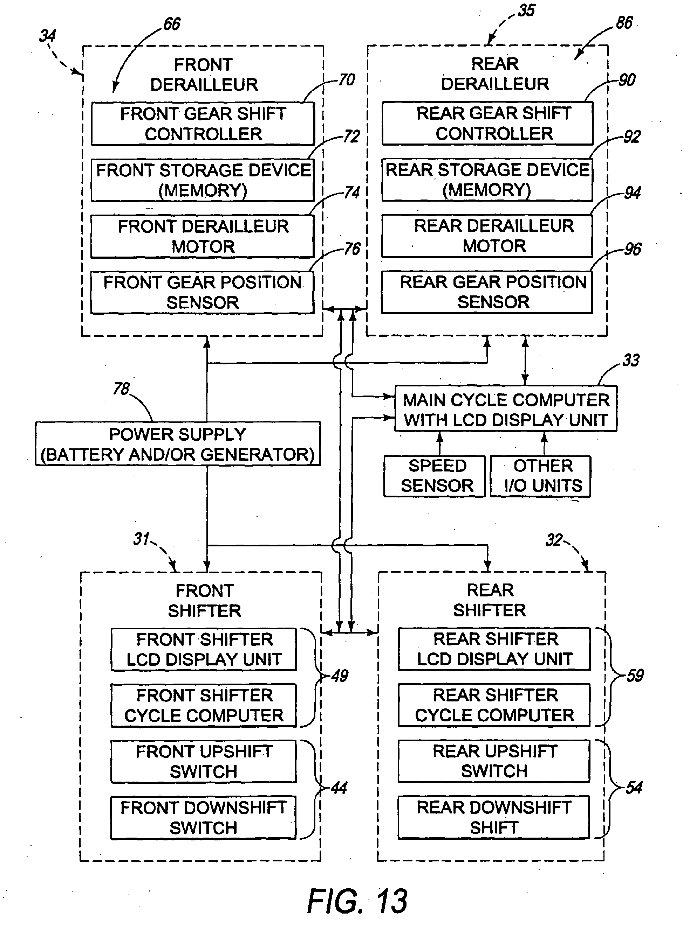

As seen in Figure 6, the front electronic derailleur 34 also includes a front electric motor unit 66 is operatively coupled to the linkage assembly 64 to move the chain guide 62 from the first derailleur position to the second derailleur position during a gear shifting operation. Preferably, the front electric motor unit 66 of the front electronic derailleur 34 is integrated with the fixed mounting member 60 of the front electronic derailleur 34 such that the front electric motor unit 66 is mounted to the bicycle 10 by the fixed mounting member 60. As seen in Figure 13, the front electric motor unit 66 is preferably equipped with, among other things, a front gear shift controller or microprocessor 70, a front storage device or memory 72, a front derailleur motor 74 and a front gear position sensor 76. A battery or some other power supply powers front electric motor unit 66, and other electrical components described herein in a known manner. In the illustrated embodiment, a battery 78 is mounted to the front electronic derailleur 34 to provide power to the front and rear electronic derailleurs 34 and 35. Preferably, either the front or rear hub includes a dynamo to generate electrical power that is supply to the battery 78. This battery can supply power to each of the front and rear control devices 31 and 32 and/or the cycle computer 33. However, the front and rear control devices 31 and 32 and/or the cycle computer 33 can have their own power supply (battery) as needed and/or desired.

The front gear shift controller 70 is operatively coupled to the front electronic derailleur 34 to operate the front electronic derailleur 34 such that the chain guide 62 is selectively shifted between the first derailleur position centered over one of the front sprockets and the second derailleur position centered over one of the rear gears during a gear shifting operation. The front gear shift controller 70 includes a motor drive circuit that drives the front derailleur motor 74 based on signals from the front gear position sensor 76 and the cycle computer 33 and/or the control devices 31 and 32.

The front storage device 72 has a memory that stores various parameters used in the operation of the front electronic derailleur 34 by the front gear shift controller 70. For example, the operating (sprocket) positions based on the front sprockets for the front electronic derailleur 34 are stored in accordance with values detected by front gear position sensor 76.

The front storage device 72 contains at least first stored gear shifting data pertaining to a first gear configuration and second stored gear shifting data pertaining to a second gear configuration. In other words, the front storage device 72 contains memory location having stop position maps corresponding to each of the front sprockets. The front storage device 72 is operatively coupled to the front gear shift controller 70 to selectively provide one of the first and second stored gear shifting data contained in the storage device to the front gear shift controller 70 to selectively control an amount of movement of the chain guide 62 of the front electronic derailleur 34 between the first and second derailleur positions based on which of the first and second stored gear shifting data is being used. In other words, the rider can select a suitable front crankset at the cycle computer 33, then the cycle computer 33 will send an information signal (what front crankset is selected) to the front gear shift controller 70, then front gear shift controller 70 adopt selected gear set maps contained in the front storage device 72. Now, when the rider operates the control devices 31 and 32 to perform a shift operation or the cycle computer 33 performs a shift, then the front derailleur motor 74 will move the chain guide 62 a predetermined amount in the axial direction of the gears.

The front derailleur motor 74 is a reversible electric motor. The front derailleur motor 74 has an output shaft that is operatively coupled to the linkage assembly 64 to move the chain guide 62 between the derailleur positions during a gear shifting operation. Reversible electric motors are conventional components that are well known in the art. Since reversible electric motors are well known in the art, the front derailleur motor 74 will not be discussed or illustrated in detail herein.

The front gear position sensor 76 preferably one or more optical sensors that senses movement and direction of movement of the front derailleur motor 74 as well as the operating position the chain guide 62. For example, two optical sensors can be used in which a first optical sensor emits first pulses in response to rotation of a motor shaft of the front derailleur motor 74, and a second optical sensor emits second pulses in response to rotation of the motor shaft of the front derailleur motor 74. The second pulses have a different phase from the first pulses. Thus, the gear position of the chain guide 62 can be detected by counting the number of these emitted pulses, and the rotational direction of the front derailleur motor 74 can be detected based on which of the two optical sensors outputs a pulse first to determine the gear shift direction. Alternatively, a potentiometer can be used as the front gear position sensor 76 to determine stop positions for each of the gear positions.

As seen in Figures 1 and 7, the rear electronic derailleur 35 is configured and arranged to shift between a plurality of rear derailleur positions. In one preferred embodiment, the rear electronic derailleur 35 has a fixed mounting member 80, a chain guide 82 and a linkage assembly 84 coupled between the fixed member 80 and the chain guide 82. These parts 80, 82 and 84 of the rear electronic derailleur 35 are well known and will not be discussed herein.

As seen in Figures 7 and 13, the rear electronic derailleur 35 includes a rear electric motor unit 86 is operatively coupled to the linkage assembly 84 to move the chain guide 82 between the rear derailleur positions during a gear shifting operation. Preferably, the rear electric motor unit 86 of the rear electronic derailleur 35 is integrated with the fixed member 80 of the rear electronic derailleur 35 such that the rear electric motor unit 86 is mounted to the bicycle 10 by the fixed member 80. As seen in Figure 13, the rear electric motor unit 86 is preferably equipped with, among other things, a rear gear shift controller or microprocessor 90, a rear storage device or memory 92, a rear derailleur motor 94 and a rear gear position sensor 96. The battery 78 that powers the front electronic derailleur 34 can also be used to power the rear electric motor unit 86, and other electrical components described herein in a known manner.

The rear gear shift controller 90 is operatively coupled to the rear electronic derailleur 35 to operate the rear electronic derailleur 35 such that the chain guide 82 is selectively shifted between one of the rear derailleur positions centered over one of the rear gears and another one of the rear derailleur positions centered over one of the rear gears during a gear shifting operation. The rear gear shift controller 90 includes a motor drive circuit that drives the rear derailleur motor 94 based on signals from the rear gear position sensor 96 and the cycle computer 33 and/or the control devices 31 and 32.

The rear storage device 92 has a memory that stores various parameters used in the operation of the rear electronic derailleur 35 by the rear gear shift controller 90. For example, the operating (sprocket) positions based on the rear gears for the rear electronic derailleur 35 are stored in accordance with values detected by rear gear position sensor 96.

The rear storage device 92 contains at least first stored gear shifting data pertaining to a first gear configuration and second stored gear shifting data pertaining to a second gear configuration. In other words, the rear storage device 92 contains memory location having stop position maps corresponding to each of the rear gears. The rear storage device 92 is operatively coupled to the rear gear shift controller 90 to selectively provide one of the stored gear shifting data contained in the storage device to the rear gear shift controller 90 to selectively control an amount of movement of the chain guide 82 of the rear electronic derailleur 35 between the rear derailleur positions based on which of the stored gear shifting data is being used. In other words, the rider can select a suitable rear cassette at the cycle computer 33, then the cycle computer 33 will send an information signal (what rear cassette is selected) to the rear gear shift controller 90, then rear gear shift controller 90 adopt selected gear set maps contained in the rear storage device 92. Now, when the rider operates the control devices 31 and 32 to perform a shift operation or the cycle computer 33 performs a shift, then the rear derailleur motor 94 will move the chain guide 82 a predetermined amount in the axial direction of the gears.

The rear derailleur motor 94 is a reversible electric motor. The rear derailleur motor 94 has an output shaft that is operatively coupled to the linkage assembly 84 to move the chain guide 82 between the derailleur positions during a gear shifting operation. Reversible electric motors are conventional components that are well known in the art. Since reversible electric motors are well known in the art, the rear derailleur motor 94 will not be discussed or illustrated in detail herein.

The rear gear position sensor 96 preferably one or more optical sensors that senses movement and direction of movement of the rear derailleur motor 94 as well as the operating position the chain guide 82. For example, two optical sensors can be used in which a first optical sensor emits first pulses in response to rotation of a motor shaft of the rear derailleur motor 94, and a second optical sensor emits second pulses in response to rotation of the motor shaft of the rear derailleur motor 94. The second pulses have a different phase from the first pulses. Thus, the gear position of the chain guide 82 can be detected by counting the number of these emitted pulses, and the rotational direction of the rear derailleur motor 94 can be detected based on which of the two optical sensors outputs a pulse first to determine the gear shift direction. Alternatively, a potentiometer can be used as the rear gear position sensor 96 to determine stop positions for each of the gear positions.

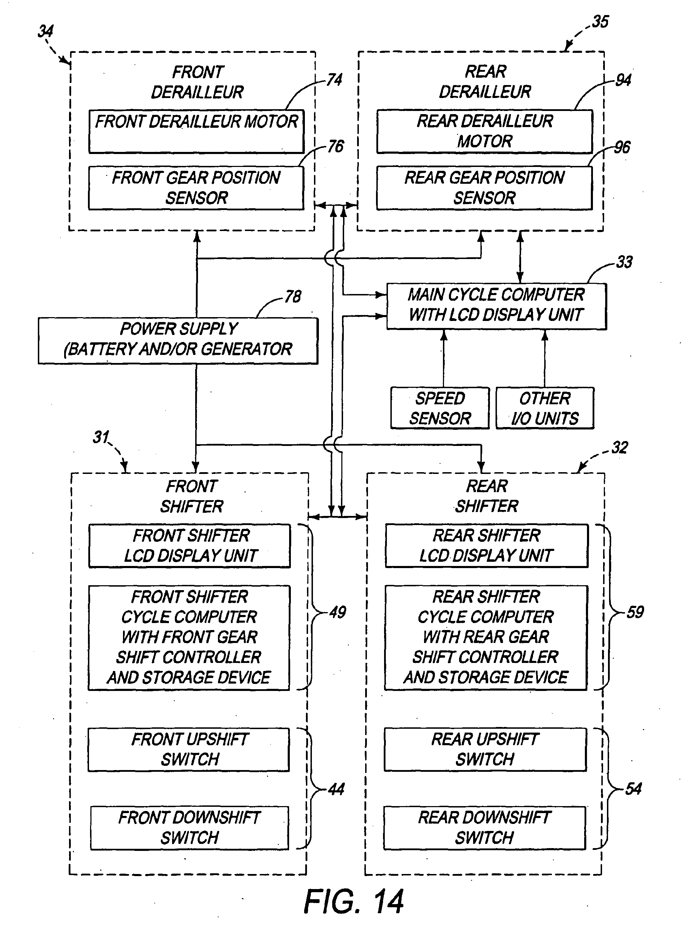

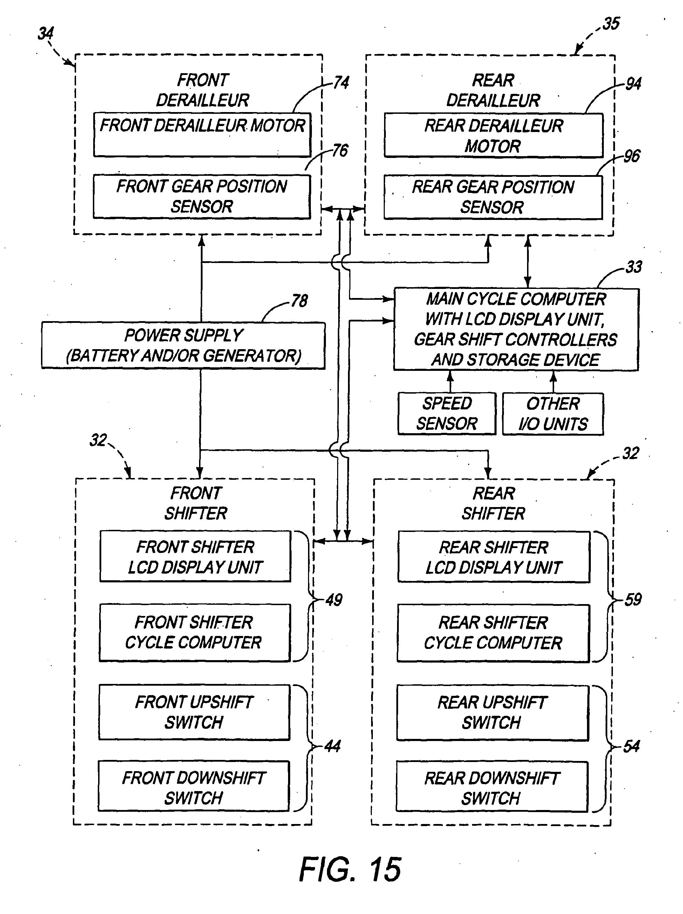

Alternately, as seen in Figures 14 and 15, the gear shift controllers and the storage devices can be eliminated from the front and rear electronic derailleurs 34 and 35. In such cases, the control devices 31 and 32 (Figure 14) can be equipped with the gear shift controllers and the storage devices, or the cycle computer 33 (Figure 15) can be equipped with the gear shift controllers and the storage devices. In view of the similarities between the first embodiment and the embodiments of Figures 14 and 15, the parts of the embodiments of Figures 14 and 15 that are same as the parts of the first embodiment will be given the same reference numerals as the parts of the first embodiment. Moreover, the descriptions of the parts of the second embodiment that are identical to the parts of the first embodiment may be omitted for the sake of brevity.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Thus, the foregoing descriptions of the embodiments according to the present invention are provided for illustration only, and not for the purpose of limiting the invention as defined by the appended claims and their equivalents.

## Claims

1. An electronic derailleur control system comprising:
a derailleur (34) configured and arranged to shift from at least a first derailleur position to a second derailleur position;
a gear shift controller (70) operatively coupled to the derailleur to operate the derailleur to shift from the first derailleur position to the second derailleur position during a gear shifting operation; and
a storage device (72) containing at least first stored gear shifting data pertaining to a first gear configuration and second stored gear shifting data pertaining to a second gear configuration, wherein the first gear configuration correspond to a first gearset and the second gear configuration corresponds to a second gearset different from the first gearset, the gear shifting data pertaining to a respective gear configuration comprising a respective number of gears and a respective number of teeth for each gear, the storage device (72) being operatively coupled to the gear shift controller (70) to selectively provide one of the first and second stored gear shifting data contained in the storage device to the gear shift controller to selectively control the derailleur based on which of the first and second stored gear shifting data is being used,
the gear shift controller (70) being configured to selectively control an amount of movement of the derailleur (34) between at least the first and second derailleur positions based on which of the first and second stored gear shifting data is being used,
a mode button operatively connected to a cycle computer for changing a mode operation of the cycle computer,
a display unit that is electrically connected to the cycle computer,
an electrical shift switch (44) configured for generating an operational command that is received by the cycle computer to cause the shifting of the derailleur
the mode button is operatively connected to the display unit, such that when the mode button is depressed, the display switches from a normal informational display screen to selection screen,
the electrical switches being used to move between the first ad second stored shifting data in order to select one of the gear shifting data,
**characterized in that**
the gear shifting data pertaining to a respective gear configuration comprises an axial spacing between the gears.

2. The electronic derailleur control system according to claim 1, further comprising a remote user input unit (33) operatively coupled to the derailleur with the remote user input unit being configured to selectively send a gear shifting data selection that instructs the gear shift controller on which of the first and second stored gear shifting data is to be used.

3. The electronic derailleur control system according to claim 2, wherein the remote user input unit (33) contains a list of gear shifting selections that correspond to different gear configurations.

4. The electronic derailleur control system according to any one of claims I to 3, wherein the gear shift controller (70) is contained in the derailleur (34).

5. The electronic derailleur control system according to any one of claims 1 to 4, wherein the storage device (72) is contained in the derailleur (34).

6. The electronic derailleur control system according to any one of claims 1 to 5, wherein the derailleur includes an electric motor (86).

## Patentansprüche

1. Elektronisches Umwerfersteuersystem, umfassend:
einen Umwerfer (34), konfiguriert und angeordnet zur Schaltung von zumindest einer ersten Umwerferposition zu einer zweiten Umwerferposition;
eine Gangschaltsteuerung (70), operativ gekoppelt bezüglich dem Umwerfer um den Umwerfer zur Schaltung von der ersten Umwerferposition zu der zweiten Umwerferposition während einem Gangschaltvorgang zu betätigen; und
eine Speichereinrichtung (72), enthaltend zumindest erste gespeicherte Gangschaltdaten, relativ zu einer ersten Gangkonfiguration sowie zweite gespeicherte Gangschaltdaten, relativ zu einer zweiten Gang- oder Schaltkonfiguration, wobei die erste Gangkonfiguration einer ersten Gangeinstellung entspricht und die zweite Gangkonfiguration einer zweiten Gangeinstellung entspricht, unterschiedlich von der ersten Gangeinstellung, wobei die Gangschaltdaten relativ zu einer jeweiligen Gangkonfiguration einer jeweiligen Anzahl an Gängen und eine jeweilige Anzahl an Zähnen für jeden Gang enthalten, wobei die Speichereinrichtung (72) operativ gekoppelt ist bezüglich der Gangschaltsteuerung (70) zum selektiven Bereitstellen von einem der ersten und zweiten Gangschaltdaten, enthalten in der Speichereinrichtung zu der Gangschaltsteuerung, zum selektiven Steuern des Umwerfers, basierend darauf, welche der ersten und zweiten gespeicherten Gangschaltdaten verwendet wird,
wobei die Gangschaltsteuerung (70) konfiguriert ist zum selektiven Steuern einer Menge oder eines Ausmaßes an Bewegung des Umwerfers (34) zwischen zumindest den ersten und zweiten Umwerferpositionen, basierend darauf, welcher der ersten und zweiten gespeicherten Gangschaltdaten verwendet ist beziehungsweise wird,
einen Mode-Knopf, operativ verbunden mit einem Fahrradcomputer zum Verändern eines Betriebsmodus des Fahrradcomputers;
eine Anzeigeeinheit, welche elektrisch verbunden ist mit dem Fahrradcomputer,
einen elektrischen Gangschalter (44), konfiguriert zum Erzeugen eines operativen Befehls, der von dem Fahrradcomputer empfangen ist oder wird um das Schalten des Umwerfers oder Derailleurs zu veranlassen,
wobei der Mode-Knopf operativ verbunden ist mit der Anzeigeeinheit, derart, dass wenn der Mode-Knopf niedergedrückt wird die Anzeige umschaltet von einem normalen Informationsanzeigeschirm hin zu einem Auswahlschirm,
wobei die elektrischen Schalter verwendet werden zur Bewegung zwischen den ersten und zweiten gespeicherten Schaltdaten, zur Auswahl unter den Gangschaltdaten, **dadurch gekennzeichnet, dass**
die Gangschaltdaten, relativ zu einer jeweiligen Gangkonfiguration eine Axialbeabstandung zwischen den Gängen enthalten.

2. Elektronisches Umwerfersteuersystem gemäß Anspruch 1, ferner umfassend eine entfernte Benutzereingabeeinheit (33), operativ gekoppelt mit dem Umwerfer, wobei die entfernte Benutzereingabeeinheit bzw. Fernsteuerbenutzereingabeeinheit konfiguriert ist zum selektiven Senden einer Gangschaltdatenauswahl, die Gangschaltsteuerung instruierend bezüglich welcher der ersten und zweiten gespeicherten Gangschaltdaten zu verwenden sind.

3. Elektronisches Umwerfersteuersystem gemäß Anspruch 2, bei welchem die entfernte Benutzereingabeeinheit (33) eine Liste von Gangschaltauswahlmöglichkeiten oder Informationen enthält, entsprechend unterschiedlichen Gangkonfigurationen.

4. Elektronisches Umwerfersteuersystem gemäß einem der Ansprüche 1 bis 3, bei welchem die Gangschaltsteuerung (70) in dem Umwerfer (34) enthalten ist.

5. Elektronisches Umwerfersteuersystem gemäß einem der Ansprüche 1 bis 4, bei welchem die Speichereinrichtung (72) in dem Umwerfer (34) enthalten ist.

6. Elektronisches Umwerfersteuersystem gemäß einem der Ansprüche 1 bis 5, bei welchem der Umwerfer oder Derailleur einen Elektromotor (86) enthält.

## Revendications

1. Système de commande de dérailleur électronique comprenant:
un dérailleur (34), configuré et agencé pour un changement depuis au moins une première position de dérailleur vers une deuxième position de dérailleur,
un contrôleur de changement de vitesse (70) relié fonctionnellement au dérailleur,
pour actionner le dérailleur pour un changement depuis la première position de dérailleur vers la deuxième position de dérailleur pendant une opération de changement de vitesse ; et
un dispositif de mémorisation (72), comprenant au moins des premières données de changement de vitesse mémorisées ayant trait à une première configuration, et des deuxièmes données de changement de vitesse mémorisées ayant trait à une deuxième configuration, dans lequel la première configuration correspond à un premier ensemble de roues dentées et la deuxième configuration correspond à un deuxième ensemble de roues dentées différent du premier ensemble de roues dentées, les données de changement de vitesse ayant trait à une configuration respective comprenant un nombre respectif de roues dentées et un nombre respectif de dents pour chaque roue dentée, le dispositif de mémorisation (72) étant relié fonctionnellement au contrôleur de changement de vitesse (70) pour fournir sélectivement au contrôleur de changement de vitesse les unes des premières et deuxièmes données de changement de vitesse mémorisées et contenues dans le dispositif de mémorisation, afin de commander sélectivement le dérailleur en fonction de quelles données des premières et deuxièmes données de changement de vitesse mémorisées sont utilisées,
le contrôleur de changement de vitesse (70) étant configuré pour contrôler sélectivement une quantité de mouvements du dérailleur (34) entre au moins les première et
deuxième positions de dérailleur, en fonction des données de changement de vitesse utilisées parmi les premières et les deuxièmes données de changement de vitesse mémorisées,
un bouton de mode relié fonctionnellement à un ordinateur de bicyclette pour un changement de mode d'opération de l'ordinateur de bicyclette,
une unité d'affichage reliée électriquement à l'ordinateur de bicyclette,
un commutateur de changement de vitesse électrique (44), configuré pour engendrer une commande opérationnelle qui est reçue par l'ordinateur de bicyclette, pour entamer le changement du dérailleur,
le bouton de mode est relié fonctionnellement à l'unité d'affichage, de sorte que lorsque le bouton de mode est en position appuyée, l'affichage commute depuis un écran d'affichage d'information normale vers un écran de sélection,
les commutateurs électriques étant utilisés pour un déplacement entre les premières et les deuxièmes données de changement de vitesse mémorisées, afin de sélectionner unes des données de changement de vitesse,
**caractérisé en ce que**,
les données de changement de vitesse ayant trait à une configuration respective comprennent un espacement axial entre les roues dentées.

2. Système de commande de dérailleur électronique selon la revendication 1, comprenant, en outre :
une unité d'entrée d'utilisateur à distance (33) reliée fonctionnellement au dérailleur,
l'unité d'entrée d'utilisateur à distance étant configurée pour envoyer sélectivement une sélection de données de changement de vitesse, qui informe le contrôleur de changement de vitesse sur les données à utiliser parmi les premières et deuxièmes données de changement de vitesse mémorisées.

3. Système de contrôle de dérailleur électronique selon la revendication 2, dans lequel l'unité d'entrée de l'utilisateur à distance (33) contient une liste de sélections de changement de vitesse qui correspondent à différentes configurations.

4. Système de commande de dérailleur électronique selon l'une quelconque des revendications 1 à 3, dans lequel le contrôleur de changement de vitesse (70) est contenu dans le dérailleur (34).

5. Système de commande de dérailleur électronique selon l'une quelconque des revendications 1 à 4, dans lequel le dispositif de mémorisation (72) est contenu dans le dérailleur (34).

6. Système de commande de dérailleur électronique selon l'une quelconque des revendications 1 à 5, dans lequel le dérailleur comprend un moteur électrique (86).
